Europäisches Patentamt

European Patent Office

Office européen des brevets

(11) Veröffentlichungsnummer: **0 216 828**
**B1**

(12) **EUROPÄISCHE PATENTSCHRIFT**

(45) Veröffentlichungstag der Patentschrift:
12.07.89

(51) Int. Cl.⁴: **B 23 D 79/00**

(21) Anmeldenummer: **86901782.2**

(22) Anmeldetag: **06.03.86**

(86) Internationale Anmeldenummer:
**PCT/DE 86/00087**

(87) Internationale Veröffentlichungsnummer:
**WO 86/05730 (09.10.86 Gazette 86/22)**

(54) **VORRICHTUNG ZUR BEHANDLUNG VON WERKSTÜCKEN.**

(30) Priorität: **02.04.85 DE 3512015**

(43) Veröffentlichungstag der Anmeldung:
**08.04.87 Patentblatt 87/15**

(45) Bekanntmachung des Hinweises auf die Patenterteilung:
**12.07.89 Patentblatt 89/28**

(84) Benannte Vertragsstaaten:
**AT CH DE FR GB IT LI**

(56) Entgegenhaltungen:
**SU-A-988 499**
**US-A-3 319 292**
**US-A-3 677 674**
**US-A-3 851 426**

(73) Patentinhaber: **ROBERT BOSCH GMBH, Postfach 50, D-7000 Stuttgart 1 (DE)**

(72) Erfinder: **CONRAD, Hans- Jürgen, Lessingstrasse 25, D-7255 Rutesheim (DE)**
Erfinder: **KURZ, Hanns, Kernerstrasse 29, D-7000 Stuttgart 1 (DE)**
Erfinder: **MARTINI, Helmut, Casilla de Correo 109, 4000 San Miguel de Tucuman (AR)**
Erfinder: **NEUMANN, Gerhard, Richard- Strauss- Weg 10, D-7014 Kornwestheim (DE)**

**Beschreibung**

**Stand der Technik**

Die Erfindung geht aus von einer Vorrichtung nach der Gattung des Anspruchs 1. Die besonders in Bezug genommenen Anlagen zum thermischen Entgraten sind bereits in verschiedenen Ausführungen bekanntgeworden. Diese Anlagen haben ein Gestell mit Trägern, die in definiertem Abstand voneinander angeordnet sind und von denen ein Träger die Werkstück-Bearbeitungskammer und ein anderer Träger das den Schließzylinder enthaltende Schließsystem für die Kammer trägt. in der Praxis unterscheidet man dabei prinzipiell zwischen drei Typen von Gestellen für Maschinen zum thermischen Entgraten. Bei der sogenannten "C-Bauweise" weist das Maschinengestell die Form des Buchstabens "C" auf. Der Kraftfluß ist offen. Die Bearbeitungskammer befindet sich zwischen den offenen Schenkeln des Gestells. Bei der "Portal-Bauweise" ist die Bearbeitungskammer zwischen zwei Säulen und Zugankern an einer die Säulen miteinander verbindenden Quertraverse befestigt. Dadurch entsteht ein geschlossener Kraftfluß. Schließlich gibt es noch die sogenannte "Plattenbauweise". Hier besteht das Maschinengestell aus zwei Platten, die in definiertem Abstand voneinander angeordnet und durch Zuganker miteinander verbunden sind. An der oberen Platte ist die Bearbeitungskammer befestigt, während die untere Platte das einen Schließzylinder mit Schließteller aufweisende Schließsystem für die Kammer trägt. Gemeinsam für alle Gestellausführungen ist, daß die beim Komprimieren und Zünden des Gasgemisches auftretenden Kräfte über die Bearbeitungskammer und deren Schließsystem auf das Gestell übertragen verden. Der Explosionsdruck des gezündeten Gasgemisches kann Werte bis zu 1000 bar erreichen. Dieser kurzzeitig sehr hohe Druck zwingt dazu, die Teile des Maschinengestells entsprechend stark zu dimensionieren, damit sich das Gestell unter den Belastungen nicht verformt. Dadurch wird die Anlage teuer, schwer und voluminös.

Durch die DE-B-1 752 440 ist eine Vorrichtung zur Behandlung von Werkstücken mittels Temperatur- und Druckstößen bekannt geworden, deren Bearbeitungskammer durch eine Gewindeplatte bzw. ein Keilgleitverschlußstück druckdicht verschlossen werden kann. Die beim Zünden des Gasgemisches auftretenden Drücke werden dabei von der Bearbeitungskammer und deren Verschlußstück aufgenommen, so daß ein druckfestes Maschinengestell entbehrlich wird. Eine solche Kammer ist jedoch für kurze Taktzeiten ungeeignet, da das Beladen der Kammer, ihr Verschließen und Öffnen sowie die Entnahme der bearbeiteten Werkstücke äußerst umständlich und zeitraubend ist.

**Vorteile der Erfindung**

Die erfindungsgemäße Vorrichtung mit den kennzeichnenden Merkmalen des Patentanspruchs 1 vereinigt den Vorteil, daß die beim Komprimieren und Zünden des Gasgemisches auftretenden Kräfte von der Werkstückßearbeitungskammer aufgenommen werden mit dem Vorzug eines schnellen, unproblematischen Verschließens und Öffnens der Kammer sowie bin- und Ausbringens der Werkstücke. Die angegebene Vorrichtung erreicht bei entsprechender Dimensionierung der Kammerwände ähnlich hohe Belastbarkeitswerte wie herkömmliche Anlagen, bei denen die Bearbeitungskammer und deren Schließsystem in einem druckfesten Gestell angeordnet sind. Dies jedoch mit weitaus geringeren Materialkosten, geringerem Gewicht und Platzbedarf, weil das Gestell, in welchem die Bearbeitungskammer angebracht ist, belastungsmäßig nur noch auf das Gewicht der Kammer und eventueller Zusatzaggregate ausgelegt zu verden braucht. Die gesamte Anlage läßt sich somit sehr kostengünstig herstellen, ohne hinsichtlich Leistungsfähigkeit Einbußen hinnehmen zu müssen. Besonders hervorzuheben ist, daß ein aufwendiges und störanfälliges Sahließsystem mit Schließzylinder und Schließteller für den Brennraum der Kammer entfällt, da zum Verschließen des Brennraums eine Wand des äußeren Hohlkörpers benutzt wird, die durch eine Relativbewegung der beiden Hohlkörper vor die Brennraumöffnung gebracht werden kann.

Durch die in den Unteransprüchen aufgeführten Maßnahmen sind vorteilhafte Weiterbildungen und Verbesserungen der im Anspruch 1 angegebenen Vorrichtung möglich. Eine besonders zweckmäßige Ausführungsform besteht darin, daß der äußere Hohlkörper fest und der innere Hohlkörper beweglich angeordnet ist. In herstellungstechnischer und baulicher Hinsicht ist es ferner von Vorteil, die beiden Hohlkörper als Hohlzylinder auszubilden. Dabei läßt sich eine besonders raumgedrängte Bauweise dadurch erzielen, daß der innere Hohlzylinder um seine Längsachse drehbar im äußeren Hohlzylinder geführt ist, und daß der äußere Hohlzylinder ein Fenster aufweist, welchem die im inneren Hohlzylinder ausgebildete Brennraumöffnung gegenüberstellbar ist. Eine andere Ausführung, bei der sich die Ausbildung eines Fensters im äußeren Hohlzylinder erübrigt, besteht darin, daß der innere Hohlzylinder in Richtung seiner Längsachse verschiebbar im äußeren Hohlzylinder geführt ist. Ferner kann der innere Hohlzylinder mehrere, mit je einer Öffnung zum Einlegen und Entnehmen der Werkstücke versehene Brennräume haben, die in Bewegungsrichtung des Körpers hintereinander liegen. Durch diese Anordnung ist es möglich, einen Brennraum zu beschicken, während in einem anderen Brennraum der Entgratprozeß stattfindet. Dies erbringt eine Verkürzung der Taktzeit.

## Zeichnung

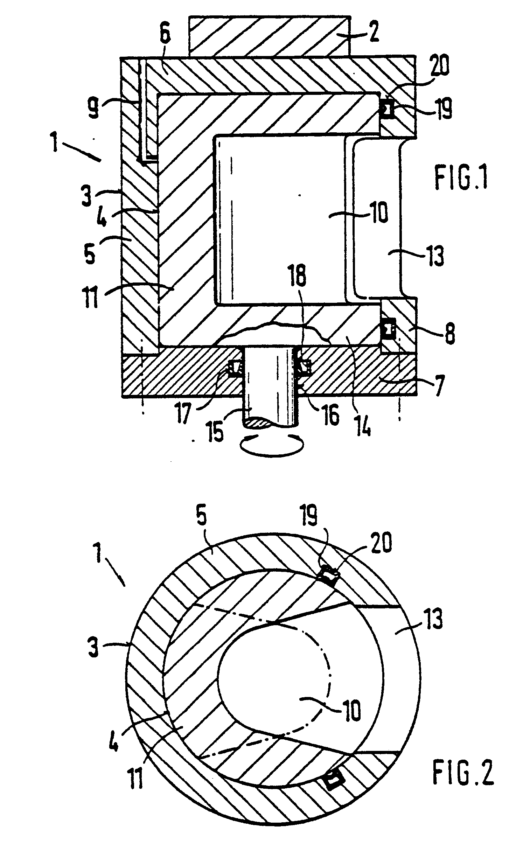

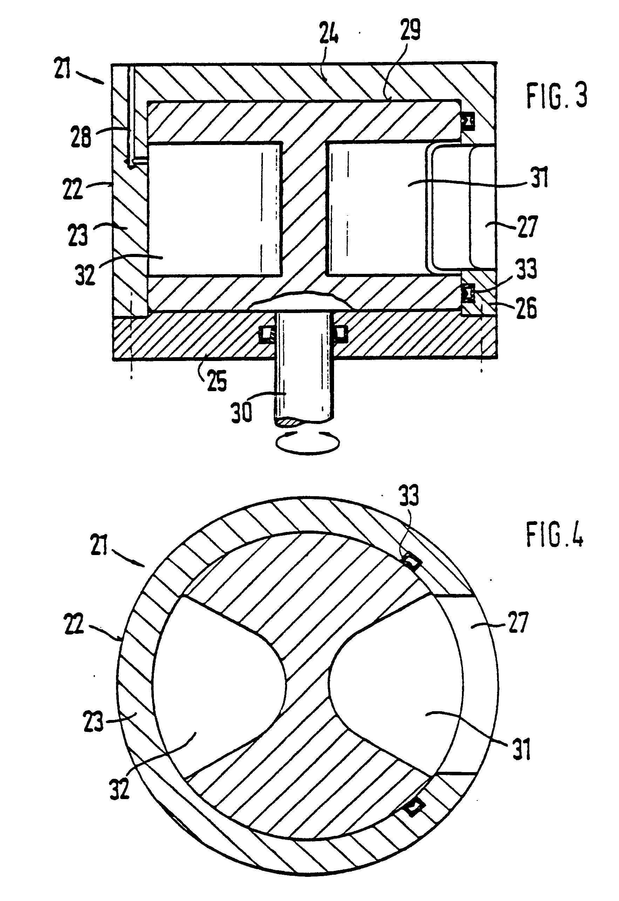

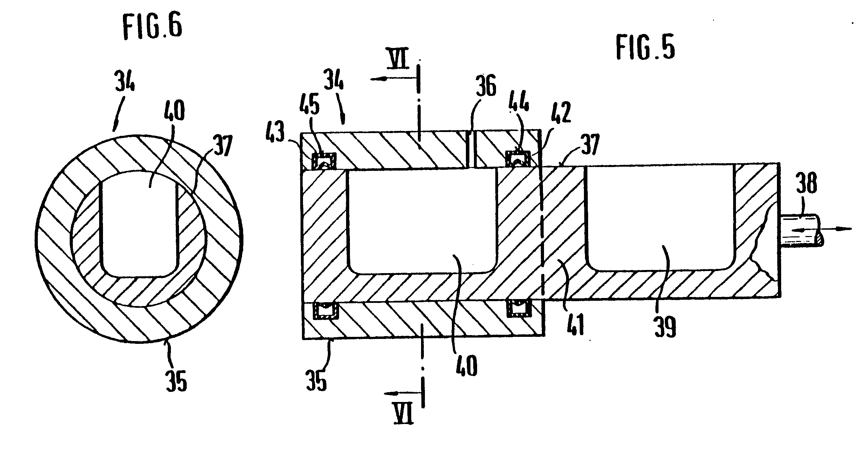

Ausführungsbeispiele der Erfindung sind in der Zeichnung dargestellt und werden in der nachfolgenden Beschreibung näher erläutert. Es zeigen Figur 1 einen Längsschnitt durch eine schematisch dargestellte Bearbeitungskammer zum thermischen Entgraten in einer ersten Ausführungsform, Figur 2 die Bearbeitungskammer nach (Figur 1 in einem Querschnitt, Figur 3 eine nach dem Prinzip der Anordnung nach Figur 1 ausgebildete Bearbeitungskammer mit mehreren Brennräumen im Längsschnitt, Figur 4 die Kammer nach Figur 3 in einem Querschnitt, Figur 5 eine weitere Ausführungsform einer Bearbeitungskammer mit mehreren Brennräumen im Längsschnitt, Figur 6 die Kammer nach Figur 5 in einem Querschnitt entlang der Linie VI-VI von Figur 5.

## Beschreibung der Ausführungsbeispiele

Die in Figur 1 dargestellte Bearbeitungskammer 1 zum thermischen Entgraten ist an einer Traverse 2 eines weiter nicht dargestellten Maschinengestells befestigt, im einzelnen besteht die Bearbeitungskammer aus einem äußeren Hohlzylinder 3 und einem inneren Hohlzylinder 4. Der Hohlzylinder 3 hat eine Ringwand 5, ein mit dieser einstückig ausgebildetes Kopfteil 6, ein separates Bodenteil 7, das an die untere Stirnfläche der Ringwand 5 angeschweißt ist und eine mit dem Bodenteil verbundene Ringsegmentleiste 8. Im Kopfteil 6 und in der Ringwand 5 ist eine Zuführbohrung 9 für Brenngas ausgebildet.

Der innere Hohlzylinder 4 ist drehbar in dem stationären Hohlzylinder 3 gelagert. Er hat einen Brennraum 10 zur Aufnahme von zu entgratenden Werkstücken, welcher zur Ringwand 5 des äußeren Hohlzylinders 3 hin offen ist. Die Öffnung des Brennraums ist zum Einlegen und Entnehmen der Werkstücke einem in der Ringwand 5 des äußeren Hohlzylinders 3 ausgebildeten Fenster 13 gegenüberstellbar. An einem Bodenteil 14 des inneren Hohlzylinders 7 ist eine Welle 15 befestigt, die eine im Bodenteil 7 des äußeren Hohlzylinders 3 ausgebildete Bohrung 16 durchgreift. An der Welle 15 greift ein nicht dargestellter Schrittschaltmotor an, welcher den inneren Hohlzylinder pro Schritt um jeweils 180° dreht, wobei sowohl eine Schrittschaltbewegung mit gleichbleibender als auch mit wechselnder Drehrichtung möglich ist

Zwischen Welle 15 und Bohrung 16 ist in einer Nut 17 eine Dichtung 18 angeordnet. Eine weitere Dichtung 19 liegt in einer das Fenster 13 umgebenden Nut 29, die an der Innenseite der Ringwand 5 des äußeren Hohlzylinders 3 ausgebildet ist. Diese Dichtung ist ein Blähschlauch aus elastischem hitzebeständigem Material, welcher mit einem Druckmittel z. B. Wasser, füllbar ist.

Zum Einlegen der zu bearbeitenden Werkstücke in den Brennraum 10 wird der innere Hohlzylinder 4 mit Hilfe des Schrittschaltmotors in die in den Figuren 1 und 2 dargestellte Lage gebracht, in welcher die Brennraumöffnung dem Fenster 13 des äußeren Hohlzylinders 3 gegenübersteht. Nach dem Beladen wird der innere Hohlzylinder 4 um 180° gedreht, so daß der Brennraum 10 die in Figur 2 strichpunktiert dargestellte Lage einnimmt, in welcher er durch die Ringwand 5 des äußeren Hohlzylinders 3 verschlossen ist. Vor dem Einlassen das Gasgemisches in den Brennraum 10 und Zünden desselben wird der Blähschlauch 19 durch Einlassen des Druckmittels "aufgepumpt". Er legt sich dabei fest gegen die äußere Mantelfläche der Ringwand 11 an und verhindert bei der Explosion des Gasgemisches im Brennraum 10 einen Austritt heißer Explosionsgase aus dem Fenster 13 des äußeren Hohlzylinders 3. Vor dem Zurückfahren des Hohlzylinders 4 in seine Ausgangslage wird der Blähschlauch entleert, so daß sich sein Querschnitt verkleinert. Dadurch verringert sich der Reibschluß zwischen Dichtung und Mantelfläche des Hohlzylinders 4 und folglich auch der an der Dichtung auftretende Verschleiß. Die Verwendung von Wasser als Druckmittel erbringt den Vorteil, daß die Dichtung von innen gekühlt und die thermische Belastung des Dichtungsmaterials herabgesetzt wird.

Bei der in den Figuren 3 und 4 dargestellten Bauart besteht die Werkstück-Bearbeitungskammer 21 gleichfalls aus einem stationären äußeren Hohlzylinder 22 mit Ringwand 23, Kopfteil 24, Bodenteil 25, Ringsegmentleiste 26, Fenster 27 und Gaszuführbohrung 28 sowie einem drehbaren inneren Hohlzylinder 29 mit Antriebswelle 30. Abweichend von der Ausführungsform nach den Figuren 1 und 2 hat der Zylinder 29 zwei als Brennräume dienende Hohlräume 31 und 32, die um 180° versetzt zueinander angeordnet sind. Diese Ausbildung ermöglicht es, in den einen Brennraum durch das Fenster 27 des äußeren Hohlzylinders 22 zu entgratende Werkstücke einzulegen, während sich der andere Brennraum in seiner Arbeitsstellung zur Durchführung eines Entgratprozesses befindet. Eine das Fenster 27 umgebende Blähschlauchdichtung 33 sorgt auch hier dafür, daß die heißen Explosionsgase vom Fenster 27 ferngehalten werden.

Bei dem Ausführungsbeispiel nach den Figuren 5 und 6 besteht die Werkstück-Bearbeitungskammer 34 aus einem äußeren, stationären, stirnseitig offenen Hohlzylinder 35 mit Gaszuführbohrung 36 und einem inneren Hohlzylinder 37, der mittels eines an seiner einen Stirnseite befestigten Hydraulikstössels 38 in Richtung seiner Längsachse verschiebbar im äußeren Hohlzylinder 35 geführt ist. In dem Zylinder 37 sind zwei zur Aufnahme von zu entgratenden Werkstücken dienende Brennräume 39 und 40 eingearbeitet. Die Brennräume sind durch einen Mittelsteg 41 voneinander getrennt und werden von oben her beschickt.

Das verwendete Schubladenprinzip ermöglicht es, den jeweils freiliegenden Brennraum mit zu bearbeitenden Werkstücken zu beschicken, während in dem anderen, im äußeren Hohlzylinder 35 befindlichen Brennraum ein Bearbeitungsprozeß stattfindet. Um den jeweils in Arbeitsstellung befindlichen Brennraum abzudichten, insbesondere den Austritt heißer Gase nach dem Zünden des Gasgemisches zu verhindern, sind zwei geschlossene Dichtringe 42, 43 vorgesehen, welche in umlaufenden Nuten 44, 45 sitzen, die an der inneren Mantelfläche des äußeren Hohlzylinders 35 ausgebildet sind. Die Dichtungen liegen an den Mantelflächen der die Brennräume begrenzenden Wände des inneren Hohlzylinders 37 an. Als Dichtringe können, wie bei den Bauarten nach den Figuren 1 bis 4, Blähschläuche verwendet werden, die vor dem Einleiten des Brenngasgemisches in den in Arbeitsstellung befindlichen Brennraum und Zünden desselben "aufgepumpt" und nach beendetem Bearbeitungsprozeß wieder entleert werden, bevor eine Bewegung des Schiebers 37 stattfindet. Zum Füllen der Schläuche kann ein flüssiges Medium, z. B. Wasser, verwendet werden, das mit Überdruck in die Schläuche eingelassen wird.

Anstelle von Hohlzylindern könnten zumindest bei der Bauart nach den Figuren 5 und 6 auch Hohlkörper anderer Form, beispielsweise mit rechteckförmigem oder quadratischen Querschnitt, verwendet werden.

## Patentansprüche

1. Vorrichtung zur Behandlung von Werkstücken mittels Temperatur- und Druckstoßen durch Zünden eines brennbaren Gasgemisches, insbesondere thermische Entgratanlage, mit einer druckdicht verschließbaren Bearbeitungskammer zur Aufnahme der Werkstücke, dadurch gekennzeichnet, daß die Bearbeitungskammer (1 bzw. 21 bzw. 34) aus einem äußeren stationär angeordneten Hohlkörper (3 bzw. 22 bzw. 35) und einem darin beweglich geführten inneren Hohlkörper (4 bzw. 29 bzw. 37) zur Aufnahme der Werkstücke besteht, daß der innere Hohlkörper mindestens einen Brennraum (10 bzw. 31, 32 bzw. 39, 40) mit einer Öffnung zum Einlegen und Entnehmen der Werkstücke aufweist, welcher durch eine Bewegung des inneren Hohlkörpers in den Bereich einer die Öffnung verschließenden Wand (5 bzw. 23 bzw. 35) des äußeren Hohlkörpers bringbar ist, und daß in dieser Wand eine Gaszuführbohrung (5 bzw. 28 bzw. 36) ausgebildet ist, welche in den Brennraum des inneren Hohlkörpers mündet.

2. Vorrichtung nach Anspruch 1 oder 2, dadurch gekennzeichnet, daß die beiden Hohlkörper als Hohlzylinder ausgebildet sind.

3. Vorrichtung nach Anspruch 3, dadurch gekennzeichnet, daß der innere Hohlzylinder (4 bzw. 29) um seine Längsachse drehbar im äußeren Hohlzylinder (3 bzw. 22) geführt ist, und daß der äußere Hohlzylinder ein Fenster (13 bzw. 27) aufweist, welchem die im inneren Hohlzylinder ausgebildete Brennraumöffnung gegenüberstellbar ist.

4. Vorrichtung nach Anspruch 3, dadurch gekennzeichnet, daß der innere Hohlzylinder (37) in Richtung seiner Längsachse verschiebbar im äußeren Hohlzylinder (35) geführt ist.

5. Vorrichtung nach einem der vorhergehenden Ansprüche, dadurch gekennzeichnet, daß der innere Hohlkörper (29 bzw. 37) mehrere, mit je einer Öffnung zum Einlegen und Entnehmen der Werkstücke versehene Brennräume (31, 32 bzw. 39, 40) hat, die in Bewegungsrichtung des Körpers hintereinander liegen.

6. Vorrichtung nach einem der vorhergehenden Ansprüche, dadurch gekennzeichnet, daß zwischen dem inneren Hohlkörper (4 bzw. 29 bzw. 37) und dem äußeren Hohlkörper (3 bzw. 22 bzw. (35) Dichtungen (19 bzw. 33 bzw. 44, 45) angeordnet sind.

7. Vorrichtung nach Anspruch 7, dadurch gekennzeichnet, daß als Dichtungen (19 bzw. 33 bzw. 42, 43) Blähschläuche dienen, die jeweils vor Durchführung eines Entgratprozesses mit einem flüssigen oder gasförmigen Druckmittel füllbar sind.

## Claims

1. Device for the treatment of workpieces by means of temperature and pressure shocks by igniting a combustible gas mixture, in particular thermal deburring installation, having a treatment chamber, which can be sealed pressure-tight, for accommodating the workpieces, characterized in that the treatment chamber (1 or 21 or 34 respectively) comprises an external hollow body (3 or 22 or 35 respectively) arranged fixed, and an internal hollow body (4 or 29 or 37 respectively) guided movably therein, for accommodating the workpieces, in that the internal hollow body has at least one combustion space (10 or 31, 32 or 39, 40 respectively) having an opening for the introduction and removal of the workpieces, which combustion space can be moved by a movement of the internal hollow body into the region of a wall (5 or 23 or (5 respectively) of the external hollow body, said wall closing the opening, and in that a gas feed bore (5 or 28 or 36 respectively) which opens into the combustion space of the internal hollow body is formed in this wall.

2. Device according to Claim 1 or 2, characterized in that the two hollow bodies are constituted as hollow cylinders.

3. Device according to Claim 3, characterized in that the internal hollow cylinder (4 or 29 respectively) is guided in the external hollow cylinder (3 or 22 respectively) so as to be rotatable about its longitudinal axis, and in that the external hollow cylinder has a window (13 or 27 respectively), opposite which the combustion space opening formed in the internal hollow cylinder can be placed.

4. Device according to Claim 3, characterized in that the internal hollow cylinder (37) is guided in the external hollow cylinder (35) so as to be displaceable in the direction of its longitudinal axis.

5. Device according to one of the preceding claims, characterized in that the internal hollow body (29 or 37 respectively) has a plurality of combustion spaces (31, 32 or 39, 40 respectively), each of which is provided with an opening for the introduction and removal of the workpieces and which lie one behind the other in the direction of movement of the body.

6. Device according to one of the preceding claims, characterized in that seals (19 or 33 or 44, 45 respectively) are arranged between the internal hollow body (4 or 29 or 37 respectively) and the external hollow body (3 or 22 or 35 respectively).

7. Device according to Claim 7, characterized in that expanding hoses, which can be filled with a liquid or gaseous pressure medium in each case prior to the carrying out of a deburring process, are used as seals (19 or 33 or 42, 43 respectively).

**Revendications**

1. Dispositif de traitement de pièces à usiner à partir de chocs thermiques et de pression par allumage d'un mélange de gaz combustible, en particulier installation d'ébarbage thermique, avec une chambre de traitement à fermeture étanche, destinée à la réception des pièces à traiter, caractérisé en ce que la chambre de traitement (1, 21 ou 34) se compose d'un corps creux extérieur (3, 22 ou 35) disposé fixe et d'un corps creux intérieur (4, 29 ou 37) guidé mobile dans celui-ci et destiné à recevoir les pièces à traiter, en ce que le corps creux intérieur présente au moins une chambre de combustion (10; 31, 32 ou 39, 40) avec une ouverture pour le chargement et le déchargement des pièces à traiter, chambre qui peut être amenée par un mouvement du corps creux intérieur dans la zone d'une paroi (5, 23 ou 35) du cylindre creux extérieur fermant l'ouverture, et en ce que dans cette paroi est réalisé un alésage pour l'amenée du gaz qui débouche dans la chambre de combustion du cylindre creux intérieur.

2. Dispositif selon la revendication 1, caractérisé en ce que les dèux corps creux sont réalisés en cylindres creux.

3. Dispositif selon la revendication 2, caractérisé en ce que le cylindre creux intérieur (4 ou 29) est guidé dans le cylindre creux extérieur (3 ou 22) en tournant autour de son axe longitudinal, et en ce que le cylindre creux extérieur présente une fenêtre (13 ou 27), en face de laquelle on peut mettre l'ouverture de la chambre de combustion réalisée dans le cylindre creux intérieur.

4. Dispositif selon la revendication 2, caractérisé en ce que le cylindre creux intérieur (37) est guidé dans le cylindre creux extérieur (35) en coulissant dans le sens de son axe longitudinal.

5. Dispositif selon une des revendications précédentes, caractérisé en ce que le corps creux intérieur (29 ou 37) a plusieurs chambres de combustion (31, 32 ou 39, 40) prévues chacune avec une ouverture pour déposer et retirer les pièces à traiter, et situées l'une derrière l'autre dans le sens de déplacement du corps.

6. Dispositif selon une des revendications précédentes, caractérisé en ce qu'entre le corps creux intérieur (4 ou 29 ou 37) et le corps creux extérieur (3 ou 22 ou 35) sont placées des garnitures d'étanchéité (19 ou 33 ou 44, 45).

7. Dispositif selon la revendication 6, caractérisé en ce que comme garnitures d'étanchéité (19 ou 33 ou 44, 45) on se sert de tuyaux gonflables, qui chaque fois avant l'exécution d'un processus d'ébarbage sont remplis avec un agent sous pression liquide ou gazeux.

FIG.1

FIG.2

FIG. 3

FIG.4

FIG.6

FIG.5

EP 0 216 828 B1